# EUROPEAN PATENT SPECIFICATION

(11) **EP 0 393 780 B1**
(45) Date of publication and mention of the grant of the patent: **06.10.1993**
(21) Application number: 90200936.4
(22) Date of filing: 17.04.1990
(51) Int. Cl.: B65H 67/04, B25J 9/04, B25J 17/02, B25J 15/02

(54) **Device for feeding an empty conical tube to a bobbin support arm and positioning it thereon**
Zuführ- und Positionierungsvorrichtung für eine konische Hülse an einem Spulentragarm
Dispositif pour alimenter un bras de support de bobine avec un tube conique et pour positionner ce tube

(30) Priority: 21.04.1989 IT 2025689
(43) Date of publication of application: 24.10.1990
(73) Proprietor: SAVIO MACCHINE TESSILI S.r.l., I-33170 Pordenone (IT)
(72) Inventor: Meroni, Roberto, I-33170 Pordenone (IT); Lant, Danny, I-33031 Basiliano, Udine (IT); Gerin, Umberto, I-33170 Pordenone (IT); Lancerotto, Fabio, I-20131 Milan (IT); Colussi, Vittorio, I-33170 Pordenone (IT)
(74) Representative: Fusina, Gerolamo

(56) References cited:
- EP-A- 0 110 275
- EP-A- 0 285 186
- DE-A- 3 726 508
- GB-A- 724 789
- US-A- 2 692 693
- US-A- 3 971 520
- US-A- 4 534 517
- US-A- 4 595 151

## Description

This invention relates to a device for transferring conical tubes from a feeding position, in which they lie witn a generatrix horizontal, to a delivery position at a bobbin support arm and positioning them thereon.

It is known from the art that in yarn production and processing operations tne yarn is made up into bobbins wound on cardboard, plastic or other tubes, which are clamped between the holding centres of a bobbin support arm and then rested against a right drive cylinder along a common generatrix.

When the cylinder rotates the tube also rotates, to collect the produced yarn by winding it about the tube to form the bobbin.

In most cases the tubes and the bobbins wound on them have a certain taper to facilitate the subsequent unwinding of the yarn. In such cases the tube must be presented into contact such that a horizontal generatrix thereof conincides with the cylinder generatrix and nence with its axis correctly inclined to the drive cylinder.

Thus the problem exists to pick up the tube from a feeding position in space and to transfer it towards a delivery position to present it to the holding centres of the bobbin support arm with correct spatial inclination such that with one of its generatrix the tube is tangential to the generatrix of the drive cylinder. In this respect, it should be noted that external random contact between a cone and a cylinder would be limited to a point if the axes of the two bodies were not in a precise spatial relationship.

US-A-4 534 517 discloses a device for transferring conical tubes from a feeding position to a delivery position at a bobbin support arm and positioning them thereon, so as to present a generatrix of the tubes tangential to a generatrix of a horizontal right drive cylinder. The known device consists of an extendible and retractable arm provided at its free end with an articulated wrist carrying at least three gripping fingers for picking up a tube in the feeding position and for releasing the tube in the delivery position, and of means for causing a controlled rotation of the wrist in a vertical plane about a pin, tne axis of which is parallel to the axis of the drive cylinder. The tube picked, up in the feeding position is first of all delivered to the bobbin support arm located in a lifted doffing position and afterwards, by means of a separate lowering device and by a special driving mechanism, the bobbin support arm together with the tube held by it is swung down to bring the tube into contact with the drive cylinder.

The known device is rather complicated inasmuch as it not only needs an extensible and retractable arm with an articulated wrist and gripping elements, but it also needs a bobbin holder lowering device cooperating with a driving mechanism to be properly controlled for a correct functioning.

Furthermore, no mention is made in the prior art document of the correct position of tangency of the empty tube with respect to the drive cylinder so as to have a desired counterclockwise angular distance between the common contact generatrix and the vertical.

According to the present invention an automatic device of the above kind is proposed having the features defined in the characterising portion of claim 1, such device being able to transfer empty tubes in the correct rest position of tangency on the drive cylinder at a desired counterclockwise angular distance between the common contact generatrix and the vertical.

The device of the invention is illustrated by way of an example in the drawing.
- Fig.1: is a schematical side view in elevation showing the device in different positions during operation between the tube feeding position and the tube delivery position, and
- Fig.2: is a partial plan view.

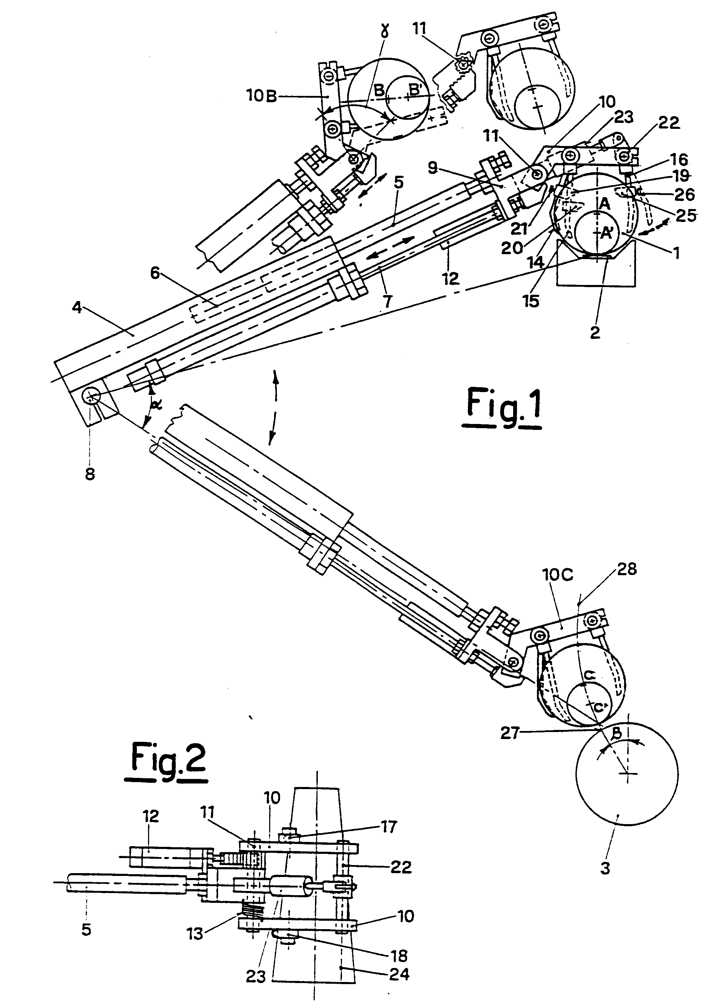

With reference to Figure 1, the tube 1 is fed for example by the conveyor belt 2 while it lies with a generatrix horizontally on said belt, and is to be transferred to the delivery position tangential to the generatrix 27 of the drive cylinder 3, along a plane of tagency which is generally not horizontal but variously inclined. In other words, the tube has to be moved from its initial feeding position to the delivery position while displacing the inclination of the tube axis, indicated by the line joining the centres of the two base circles of the tube cone, from the position where said centres are indicated A-A' to the delivery position where they are indicated C-C'.

The device according to the invention consists of an arm 4 provided with a directional guide 5 which penetrates into and withdraws from a cavity 6 provided in the arm 4 to direct an extendable member 7, which can consist of a pneumatic or hydraulic system, or a mechanical rack system.

Said arm 4 is also provided with a pivot 8 of horizontal axis which allows it to undergo controlled rotation in a vertical plane by an operating system of known type, not shown in the Figure.

At its end 9 the arm 4 is provided with an articulated wrist consisting of a pair of brackets 10 able to rotate in a vertical plane about the axis of a pin 11 provided with a gear, under the action for example of a pneumatic cylinder 12 in opposition to a return spring 13 (see Figure 2).

In Figure 1 the tube has its major base facing the reader and thus its cavity is visible.

The member by which the arm 4 grips the tube 1, and consisting of a plurality of and preferably three opposing fingers 14, 15 and 16, is disposed on the brackets 10.

The two fingers 14 and 15 are fixed to couplings 17 and 18 so that the tube 1 is contacted by their ends and by locator members 19 and 20, the position of which is adjustable by means of threaded setscrews 21 in accordance with the tube shape (taper) and size.

The opposite finger 16 is mounted on shaft 22 supported by the brackets 10 and can open and close under the action of a pneumatic cylinder 23 against a return spring, not shown on the Figure, by rotating about the axis 24 of the shaft 22. The tube 1 is also contacted by the end of the finger 16 and by its locator 25, which is adjustable by means of the threaded setscrew 26.

The gripping action of the three fingers 14, 15 and 16 is correct and precise and enables the tube 1 to be returned to alignment should it have rested skew on the conveyor belt 2, ie if it had rested with its generatrix inclined to the direction of movement of the belt 2.

When the three-finger gripper member has gripped the tube 1 in the feeding position it is first of all raised by rotating the arm 4 about the pivot 8 and then it is withdrawn by retracting the extendable member 7.

The pair of brackets 10 is then rotated counterclockwise into position 10B by the action of the cylinder 12. In this manner the wrist of the arm 4 rotates to cause the tube to assume an intermediate position, in which The centres of its base circles are indicated B-B' and which, in consideration of the successive rotation undergone by the arm 4 about pivot, 8 represents the correct position for tangency with the drive cylinder 3 at the contact generatrix 27.

The rotation which the wrist has to undergo in order to present the tube in the correct position corresponds to an angle γ equal to the algebraic sum of the angle α, which expresses the clockwise rotation between the generatrix along which the picked-up tube 1 rests and the generatrix along which the delivered tube makes contact with the drive cylinder 3, and the angle β, which expresses the anticlockwise angular distance between the generatrix 27 along which it rests on the cylinder 3 and the vertical.

In Figure 1 the angle γ is about 80°, whereas the angle α is about 50 and the angle β about 30°.

After being raised and retracted and the wrist rotated to bring the brackets 10 into position 10B, the arm 4 is rotated downwards from said intermediate position and extended outwards so that the tube becomes located with its surface tangential to the circle having its centre coinciding with the axis of the pivot 8 and its radius just less (by a few millimetres) than the distance between the axis of the pivot 8 and the desired generatrix of tangency 27 between the cylinder 3 and tube 1. The brackets 10 are now in position 10C and the tube is in the delivery position. When in this position the tube is clamped between the holding centres of the bobbin support arm (not shown) which is ready to receive it. When the tube has been clamped, the fingers 14, 15 and 16 release the tube. The arm 4 can rise and return to its rest position. Then when the winding of the new bobbin is to commence, the bobbin support arm moves the tube through the trajectory 28 to cover the very small distance which separates it from the cylinder 3, so that it now rests on the cylinder 3.

The brackets 10 can be rotated into position 10B at any intermediate time or stage between the picking-up of the tube 1 from the belt 2 and its delivery to the bobbin support arm at a point substantially coinciding with the generatrix 27, provided the obstacles along the path are taken into consideration.

## Claims

1. A device for transferring conical tubes (1) from a feeding position, in which they lie with a generatrix horizontal, to a delivery position at a bobbin support arm and positioning them thereon, so as to present the same generatrix of the tubes (1) tangential to a generatrix (27) of a horizontal right drive cylinder (3), consisting of an extendible and retractable arm (4), provided at its free end (9) with an articulated wrist (10) carrying at least three gripping fingers (14,15,16) for picking up the tubes (1) in said feeding position and for releasing the tubes (1) in said delivery position, and of means (12) for causing a controlled rotation of said wrist (10) in a vertical plane about a pin (11), the axis of which is parallel to the axis of said drive cylinder (3), characterised in that said arm (4), at its end opposite to said free end (9), is pivotably mounted for rotation in a vertical plane about a pivot (8), the axis of which is parallel to the axis of said pin (11), and that said arm (4) is provided with members for causing its controlled rotation about said pivot (8), wherein the angle (γ) of rotation of said wrist (10) about said pin (11) is equal to the algebraic sum of an angle (α), which represents the rotation of said arm (4) and of the tube (1), gripped by said gripping fingers (14,15,16), between said feeding position and said delivery position,and an angle (β) which represents the counterclockwise angular distance between the desired generatrix (27) along which the tube (1) rests on the drive cylinder (3) and the vertical.

2. A device according to claim 1, characterised in that three gripping fingers (14,15,16) are provided, which oppose each other, two fingers (14,15) being fixed with respect to said wrist (10) and the third finger (16) opposing said fixed fingers (14,15) being rotatably connected to said wrist (10).

3. A device according to claim 2, characterised in that each of the three gripping fingers (14,15,16) is able to engage a tube (1) with its end part and with a locator member (19,20,25) disposed on the relative finger in an adjustable position.

4. A device according to claims 2 and 3, characterised in that said two fixed fingers (14,15) are connected to the wrist (10) by means of couplings, the position of which being adjustable and in that the gripping action of said fingers (14,15,16) is adjustable in accordance with the shape and size of the tubes (1) to be handled by adjusting the position of said couplings (17,18) and/or of said locator members (19,20,25).

## Patentansprüche

1. Vorrichtung zum Überführen konischer Hülsen (1) von einer Zuführposition, in der sie mit einer Mantellinie horizontal liegen, zu einer Lieferposition an einem Spulentragarm und zum Positionieren darauf, so daß die gleiche Mantellinie der Hülsen (1) tangential zu einer Mantellinie (27) eines horizontalen, rechtsdrehenden Zylinders (3) liegt, bestehend aus einem ausfahrbaren und einziehbaren Arm (4), der an seinem freien Ende (9) mit einem angelenkten Handgelenk (10) versehen ist, das wenigstens drei Greiffinger (14, 15, 16) zum Erfassen der Hülsen (1) in der Zuführposition und zum Freigeben der Hülsen (1) in der Lieferposition trägt, und aus einer Einrichtung (12) zum Ausführen einer gesteuerten Drehung dieses Handgelenkes (10) in einer vertikalen Ebene um einen Zapfen (11), dessen Achse parallel zur Achse des angetriebenen Zylinders (3) liegt,
**dadurch gekennzeichnet**,
daß der Arm (4) an seinem dem freien Ende (9) gegenüberliegenden Ende zum Verschwenken in einer vertikalen Ebene um einen Gelenkzapfen (8) verschwenkbar angebracht ist, dessen Achse parallel zu der Achse des Zapfens (11) liegt, und daß der Arm (4) mit Elementen zum Ausführen der gesteuerten Drehung um diesen Gelenkzapfen (8) versehen ist, wobei der Winkel (γ) der Drehung des Handgelenkes (10) um den Zapfen (11) gleich der algebraischen Summe eines Winkels (α) ist, der die Drehung des Armes (4) und der Hülse (1), die von den Greiffingern (14, 15, 16) erfaßt ist, zwischen der Zuführposition und der Lieferposition darstellt, und eines Winkels (β), der im Gegenuhrzeigersinn den Winkelabstand zwischen der erwünschten Mantellinie (27), längs der die Hülse (1) auf dem Antriebszylinder (3) aufliegt, und der Vertikalen darstellt.

2. Vorrichtung nach Anspruch 1,
dadurch gekennzeichnet,
daß drei Greiffinger (14, 15, 16) vorgesehen sind, die einander gegenüberliegen, wobei zwei Finger (14, 15) relativ zu dem Handgelenk (10) festliegen und der dritte Finger (16), der den festen Fingern (14, 15) gegenüberliegt, verschwenkbar mit dem Handgelenk (10) verbunden ist.

3. Vorrichtung nach Anspruch 2,
dadurch gekennzeichnet,
daß jeder der drei Greiffinger (14, 15, 16) an einer Hülse (1) mit seinem Endteil und mit einem Positionierelement (19, 20, 25) anliegen kann, das an dem betreffenden Finger in einer einstellbaren Stellung angebracht ist.

4. Vorrichtung nach den Ansprüchen 2 und 3,
dadurch gekennzeichnet,
daß die zwei festliegenden Finger (14, 15) mit dem Handgelenk (10) mittels Kupplungen verbunden sind, deren Stellung einstellbar ist, und daß die Greifwirkung der Finger (14, 15, 16) in Übereinstimmung mit der Form und der Größe der zu handhabenden Hülsen (1) durch Einstellen der Stellung der Kupplungen (17, 18) und/oder der Positionierelemente (19, 20, 25) einstellbar ist.

## Revendications

1. Dispositif pour transférer des tubes coniques (1) d'une position d'amenée, dans laquelle ils sont placés avec une génératrice horizontale, à une position de délivrance à un bras support de bobine et pour les mettre en place sur celui-ci, de façon à présenter la même génératrice des tubes (1) tangente à une génératrice (27) d'un rouleau d'entraînement (3) droit et horizontal, comprenant un bras (4) extensible et rétractable pourvu en son extrémité libre (9) d'un poignet articulé (10) qui porte au moins trois doigts de préhension (14, 15, 16) pour saisir les tubes (1) dans ladite position d'amenée et relâcher les tubes (1) dans ladite position de délivrance, ainsi qu'un moyen (12) pour provoquer une rotation commandée dudit poignet (10) dans un plan vertical autour d'un tourillon (11) dont l'axe est parallèle à l'axe dudit rouleau d'entraînement (3), **caractérisé** en ce que ledit bras (4), en son extrémité opposée à ladite extrémité libre (9), est monté de façon pivotante en vue d'une rotation dans un plan vertical autour d'un pivot (8) dont l'axe est parallèle à l'axe dudit tourillon (11), et en ce que ledit bras (4) est pourvu d'organes servant à provoquer sa rotation commandée autour dudit pivot (8), sachant que l'angle (γ) de rotation dudit poignet (10) autour dudit tourillon (11) est égal à la somme algébrique d'un angle (α), qui représente la rotation dudit bras (4) et dudit tube (1) pincé par lesdits doigts de préhension (14, 15, 16) entre ladite position d'amenée et ladite position de délivrance, et d'un angle (β) qui représente la distance angulaire dans le sens anti-horaire entre la génératrice souhaitée (27) le long de laquelle le tube (1) appuie sur le rouleau d'entraînement (3) et la verticale.

2. Dispositif selon la revendication 1, **caractérisé** en ce qu'il comprend trois doigts de préhension (14, 15, 16), qui s'opposent les uns aux autres, deux doigts (14, 15) étant fixés par rapport au poignet (10) et le troisième doigt (16) opposé auxdits doigts fixes (14, 15) étant relié audit poignet (10) de façon à pouvoir tourner.

3. Dispositif selon la revendication 2, **caractérisé** en ce que chacun des trois doigts de préhension (14, 15, 16) est capable de venir en contact avec le tube (1) avec sa partie d'extrémité et avec un organe de repérage (19, 20, 25) placé sur le doigt correspondant dans une position réglable.

4. Dispositif selon les revendications 2 et 3, **caractérisé** en ce que lesdits deux doigts fixes (14, 15) sont reliés au poignet (10) par des éléments de liaison dont la position est réglable et en ce que l'action de préhension desdits doigts (14, 15, 16) est réglable en fonction de la forme et de la taille des tubes (1) à manipuler par réglage de la position desdits éléments de liaison (17, 18) et/ou desdits organes de repérage (19, 20, 25).
